# EUROPEAN PATENT APPLICATION

(11) **EP 4 819 665 A1**
(43) Date of publication of application: **07.10.2026**
(21) Application number: 23959725.5
(22) Date of filing: 28.11.2023
(51) Int. Cl.: H04W 24/02, H04W 76/28

(54) **TIMER STATE ADJUSTING METHOD AND APPARATUS, DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: RGTH
(86) International application number: PCT/CN2023/134744
(87) International publication number: WO 2025/111802

(57) **Abstract**

The present application relates to the technical field of communications, and discloses a timer state adjusting method and apparatus, a device, a medium and a program product. The method is executed by a terminal device, the terminal device is provided with a first receiver and a second receiver, the working energy consumption of the first receiver is lower than that of the second receiver, and the method comprises: adjusting the state of a first timer on the basis of a monitoring state of the first receiver, wherein the first timer is a timer used for indicating the time to switch an SSSG, and the SSSG is a search space used by the second receiver during monitoring. According to the method, the state of the first timer is adjusted on the basis of the monitoring state of the first receiver, so that the first timer is not always in a running state, reducing or avoiding the problem of the first timer timing out due to the first timer being always in the running state when the second receiver is not in the monitoring state or not in the working state, thereby meeting the monitoring time requirements of a primary receiver.

## Description

### TECHNICAL FIELD

This application relates to the field of communications technologies, and in particular to a method and apparatus and for adjusting a timer status, a device, a medium, and a program product.

### BACKGROUND

For a terminal device having a primary receiver, the primary receiver is used to monitor a Physical Downlink Control Channel (Physical Downlink Control CHannel, PDCCH), and a search space switching timer is used to indicate a time for switching a Search Space Set Group (Search Space Set Group, SSSG), where the SSSG is a search space used when the primary receiver monitors the PDCCH.

In a related technology, after a wake-up receiver with lower power consumption is configured in a terminal device, a wake-up receiver is used to monitor a wake-up signal during a period in which a primary receiver does not need to monitor a PDCCH. However, in a period when the wake-up receiver monitors the wake-up signal, the search space switching timer is always in a running status, which may result in timeout of the search space switching timer, and the search space switching timer instructs to switch a SSSG in a case in which the monitoring time of the primary receiver is not enough, resulting in that monitoring time requirement of the primary receiver on a target SSSG cannot be met.

### SUMMARY

This application provides a method and apparatus for adjusting a timer status, a device, a medium, and a program product. The technical solution includes at least the following aspects.

According to an aspect of embodiments of this application, a method for adjusting a timer status is provided. The method is executed by a terminal device, the terminal device includes a first receiver and a second receiver, and operating energy consumption of the first receiver is lower than operating energy consumption of the second receiver. The method includes:
adjusting a status of the first timer based on a monitoring status of the first receiver;
where the first timer is configured to indicate a time for switching a SSSG, and the SSSG is a search space used when the second receiver performs monitoring.

According to another aspect of the embodiments of this application, a method for adjusting a timer status is provided. The method is executed by a terminal device, the terminal device includes a first receiver and a second receiver, and operating energy consumption of the first receiver is lower than operating energy consumption of the second receiver. The method includes:
adjusting a status of the first timer based on configuration information transmitted by a network device;
where the first timer is configured to indicate a time for switching a SSSG, and the SSSG is a search space used when the second receiver performs monitoring.

According to another aspect of the embodiments of this application, a method for transmitting configuration information is provided. The method is executed by a network device, and the method includes:
transmitting configuration information;
where the configuration information is used by the terminal device to adjust a status of a first timer, the first timer is configured to indicate a time for switching a SSSG, the SSSG is a search space used when the second receiver performs monitoring, the terminal device includes a first receiver and a second receiver, and operating energy consumption of the first receiver is lower than operating energy consumption of the second receiver.

According to another aspect of the embodiments of this application, an apparatus for adjusting a timer status is provided. The apparatus includes a first receiver and a second receiver, and operating energy consumption of the first receiver is lower than operating energy consumption of the second receiver. The apparatus includes:
an adjusting module, configured to adjust a status of the first timer based on a monitoring status of the first receiver;
where the first timer is configured to indicate a time for switching a SSSG, and the SSSG is a search space used when the second receiver performs monitoring.

According to another aspect of the embodiments of this application, an apparatus for adjusting a timer status is provided. The apparatus includes a first receiver and a second receiver, and operating energy consumption of the first receiver is lower than operating energy consumption of the second receiver. The apparatus includes:
an adjusting module, configured to adjust a status of a first timer based on configuration information transmitted by a configuration information transmitting apparatus;
where the first timer is configured to indicate a time for switching a SSSG, and the SSSG is a search space used when the second receiver performs monitoring.

According to another aspect of the embodiments of this application, an apparatus for transmitting configuration information is provided, where the apparatus includes:
a transmitting module, configured to transmit configuration information;
where the configuration information is used by an apparatus for adjusting a timer status to adjust a status of a first timer. The first timer is configured to indicate a time for switching a SSSG, the SSSG is a search space used when the second receiver performs monitoring, the apparatus for adjusting a timer status includes a first receiver and a second receiver, and operating energy consumption of the first receiver is lower than operating energy consumption of the second receiver.

According to another aspect of the embodiments of this application, a terminal device is provided, where the terminal device includes:
a processor, a transceiver connected to the processor, and a memory configured to store an executable instruction of the processor;
where the processor is configured to load and execute the executable instruction to implement the method for adjusting a timer status according to the foregoing aspects.

According to another aspect of the embodiments of this application, a network device is provided, where the network device includes:
a processor, a transceiver connected to the processor, and a memory configured to store an executable instruction of the processor;
where the processor is configured to load and execute an executable instruction to implement the method for transmitting configuration information according to the foregoing aspects.

According to another aspect of the embodiments of this application, a chip is provided, where the chip includes a programmable logic circuit and/or a program instruction; and when the chip runs, the chip is configured to implement the method for adjusting a timer status or the method for transmitting configuration information according to the foregoing aspects.

According to another aspect of the embodiments of this application, a computer readable storage medium is provided, where the computer readable storage medium stores at least one segment of program, and the at least one segment of program is loaded and executed by a processor to implement the method for adjusting a timer status or the method for transmitting configuration information according to the foregoing aspects.

According to another aspect of the embodiments of this application, a computer program product or a computer program is provided. The computer program product or the computer program includes a computer instruction. The computer instruction is stored in a computer readable storage medium. The processor acquires the computer instruction from the computer readable storage medium, and the processor executes the computer instruction to implement the method for adjusting a timer status or the method for transmitting configuration information according to the foregoing aspects.

The technical solution provided in this embodiment of this application may achieve the following beneficial effects.

A status of the first timer is adjusted based on a monitoring status of the first receiver. The first timer is configured to indicate a time for switching a SSSG, and the SSSG is a search space used when the second receiver performs monitoring, so that the first timer is not always in a running status, thereby reducing or avoiding a problem of timeout of the first timer since the first timer is still in a running status when the second receiver is not in a monitoring status or is not in a working status, thus meeting a monitoring time requirement of the primary receiver.

### BRIEF DESCRIPTION OF DRAWINGS

To describe technical solutions in embodiments of this application more clearly, the following briefly describes the accompanying drawings required for the embodiments. Apparently, the accompanying drawings in the following description show merely some embodiments of this application, and a person skilled in the art may still derive other drawings from these accompanying drawings without creative efforts.
FIG. 1 shows a schematic diagram of a receiver system according to a related art;
FIG. 2 shows a schematic diagram of a communications system according to an example embodiment of this application;
FIG. 3 shows a flowchart of a method for adjusting a timer status according to an example embodiment of this application;
FIG. 4 shows a schematic diagram of a method for adjusting a timer status according to an example embodiment of this application;
FIG. 5 shows a schematic diagram of a method for adjusting a timer status according to an example embodiment of this application;
FIG. 6 shows a schematic diagram of a method for adjusting a timer status according to an example embodiment of this application;
FIG. 7 is a schematic diagram of a method for adjusting a timer status according to an example embodiment of this application;
FIG. 8 shows a schematic diagram of a method for adjusting a timer status according to an example embodiment of this application;
FIG. 9 shows a flowchart of a method for adjusting a timer status according to an example embodiment of this application;
FIG. 10 shows a flowchart of a method for adjusting a timer status according to an example embodiment of this application;
FIG. 11 shows a block diagram of an apparatus for adjusting a timer status according to an example embodiment of this application;
FIG. 12 shows a block diagram of an apparatus for adjusting a timer status according to an example embodiment of this application;
FIG. 13 shows a block diagram of an apparatus for transmitting configuration information according to an example embodiment of this application;
FIG. 14 is a schematic structural diagram of a terminal device according to an example embodiment of this application; and
FIG. 15 shows a schematic structural diagram of a network device according to an example embodiment of this application.

### DESCRIPTION OF EMBODIMENTS

To make the objectives, technical solutions, and advantages of this application clearer, the following further describes the implementations of this application in detail with reference to the accompanying drawings. Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, they are only examples of apparatuses and methods that are described in the appended claims in detail and that are consistent with some aspects of this application.

The terms used in this application are for the sole purpose of describing specific embodiments and are not intended to limit this application. The singular forms of "a/an", "said", and "the" used in this application and the appended claims are also intended to include plural forms, unless the context clearly implies otherwise. It should also be understood that the term "and/or" as used herein refers to and includes any or all possible combinations of one or more of associated listed items.

It should be understood that although the terms such as first, second, and third may be used in this application to describe various types of information, such information is not limited to these terms. These terms are merely used to distinguish information of a same type from each other. For example, without departing from the scope of this application, first information may also be referred to as second information. Similarly, second information may also be referred to as first information. Depending on the context, the term "if" as used herein may be interpreted as "in a case that", "when", or "in response to determining that".

The technical solutions in embodiments of this application may be applied to various communications systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an advanced long term evolution (Advanced long term evolution, LTE-A) system, a new radio (New Radio, NR) system, an evolved NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), a wireless local area network (Wireless Local Area Networks, WLAN) system, a wireless fidelity (Wireless Fidelity, WiFi) system, a fifth-generation communications (5th-Generation, 5G) system, a cellular internet of things system, a cellular passive internet of things system, a subsequent evolved system of a 5G NR system, or a 6G system and a subsequent evolved system.

It should be understood that, in some embodiments of this application, "5G" may also be referred to as "5G NR" or "NR".

It should be understood that, in descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefining" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

Next, 5G is described as follows.

With the pursuit of high-speed, low-delay, high-speed mobility, and high-efficiency, and an increase in the diversity and complexity of services in future life, increasingly deep research and development is conducted on 5G. A main application scenario of the 5G is: enhanced Mobile BroadBand (enhanced Mobile BroadBand, eMBB), Ultra Reliable and Low Latency Communication (Ultra Reliable and Low Latency Communication, URLLC), and massive Machine Type Communication (massive Machine Type Communication, mMTC).

The eMBB aims to provide a user with access to multimedia content, services, and data, and a demand for the eMBB grows rapidly. On the other hand, because the eMBB may be deployed in different scenarios, such as an indoor scenario, an urban scenario, and a rural scenario, a difference between a capability and a requirement of the eMBB is also relatively large, an analysis needs to be performed with reference to a specific deployment scenario. Typical applications of URLLC include industrial automation, power automation, telemedicine operation (surgery), and traffic safety assurance. Typical features of the mMTC include high connection density, small data volume, delay-insensitive services, low cost and long service life of modules.

NR may also be independently deployed. In a 5G network environment, to reduce air interface signaling and quickly restore a wireless connection, and quickly restore a data service, a new Radio Resource Control (Radio Resource Control, RRC) state, that is, an RRC inactive state (RRC_INACTIVE), is set. This state is different from the RRC idle state (RRC_IDLE) and the RRC connected state (RRC_CONNECTED).

RRC idle state (RRC_IDLE): Mobility is a cell selection and reselection based on a terminal device such as User Equipment (User Equipment, UE). Paging is initiated by a Core Network (Core Network, CN), and a paging area is configured by the CN. On a network device side, for example, on a base station side, an Access Stratum (Access Stratum, AS) context does not exist, and an RRC connection does not exist.

RRC connection state (RRC_CONNECTED): an RRC connection exists, and a UE AS context exists between the base station and the UE. The network device side knows that the location of the UE is a specific cell level. Mobility is mobility controlled by a network device side. Unicast data may be transmitted between the UE and the base station.

RRC inactive state (RRC_INACTIVE): Mobility is a cell selection and reselection based on a UE, and there is a connection between CN-NR. A UE AS context exists on a specific base station. Paging is triggered by a Radio Access Network (Radio Access Network, RAN), and a RAN-based paging area is managed by the RAN. A network device side knows that a location of the UE is a RAN-based paging area level.

Next, the UE energy saving mechanism is described as follows.

The UE energy saving mechanism includes a solution for reducing blind detection of a Physical Downlink Control CHannel (Physical Downlink Control CHannel, PDCCH) by the UE. One manner is to control a PDCCH monitoring behavior of the UE by using a Search Space Set Group (Search Space Set Group, SSSG) switching (switching) mechanism, that is, the network device configures two or three SSSGs for the UE, where a first type of SSSG corresponds to a relatively dense PDCCH monitoring occasion, for example, a SSSG index 1 (SSSG index 1) or a SSSG index 2 (SSSG index 2), and a second type of SSSG corresponds to a relatively sparse PDCCH monitoring occasion, for example, a SSSG index 0 (SSSG index 0). The first type of SSSG can be used to implement more timely scheduling and reduce service delay. The second type of SSSG purpose can be used to achieve power saving for the UE.

SSSG switching may be implemented in an explicit indication manner of the network device. The network device may transmit dynamic signaling to instruct the UE to use which SSSG to monitor the PDCCH. Generally, based on a downlink service requirement of the UE and an uplink service requirement previously reported by the UE by using a Buffer Status Report (Buffer Status Report, BSR), when the network device considers that the UE has no emergency uplink and downlink data transmission requirement in a future period of time, the network device instructs the UE to monitor a PDCCH by using the second type of SSSG to achieve saving power for the UE. When the UE receives the SSSG switching indication, the UE should follow the SSSG switching indication.

The SSSG switching may also be implemented in an implicit manner. The network device configures a search space switching timer (searchSpaceSwitchTimer). When the network device instructs the UE to switch to the SSSG index 1 (SSSG index 1) or the SSSG index 2 (SSSG index 2), the UE starts the search space switching timer. When the search space switching timer expires, the UE switches to the SSSG index 0 (SSSG index 0) to monitor the PDCCH.

Next, a receiver system is described as follows.

By introducing an ultra-Low Power Wake-Up Signal (ultra-Low Power Wake-Up Signal, LP-WUS), the wake-up receiver of the terminal device starts a primary receiver after receiving the LP-WUS, so as to monitor a downlink signal, thereby achieving energy saving. In embodiments of this application, a low power consumption wake-up signal is referred to as a wake-up signal for short.

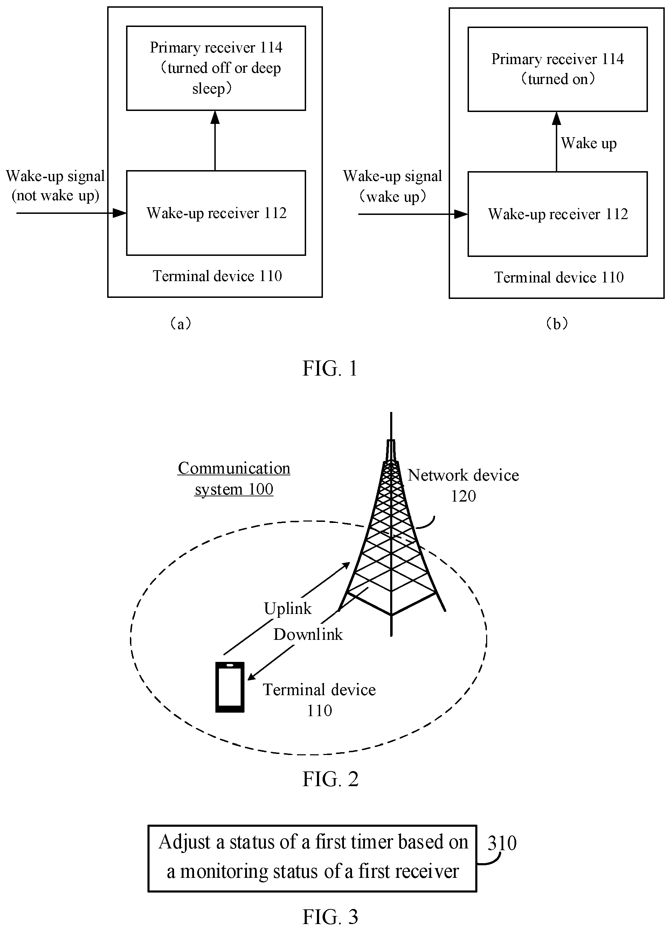

FIG. 1 shows a schematic diagram of a receiver system according to a related art. For example, the terminal device 110 is a receiver system, and the terminal device 110 includes a Wake-Up Receiver (Wake-Up Receiver, WUR) 112 and a primary receiver (main radio) 114.

In some embodiments, the wake-up receiver 112 includes at least one of a common wake-up receiver and an ultra-Low Power Wake-Up Receiver (LP-WUR).

In some embodiments, the primary receiver 114 may be equivalent to a primary transceiver or a primary air interface communications unit.

To further save power, a wake-up receiver 112 is introduced for receiving a wake-up signal. The wake-up receiver 112 is characterized by an extremely low cost, extremely low complexity, and extremely low power consumption, and receives the wake-up signal by mainly using an envelope-based detection manner. Therefore, the wake-up signal received by the wake-up receiver 112 is different from a signal carried on a Physical Downlink Control CHannel (Physical Downlink Control CHannel, PDCCH) defined by a related standard, in a modulation manner, a waveform, and the like. The wakeup signal is mainly an envelope signal modulated by performing Amplitude Shift Keying (Amplitude Shift Keying, ASK) on the carrier signal. The demodulation of the envelope signal may be implemented by using a low power consumption circuit driven by energy provided by a radio-frequency signal. Therefore, the wake-up receiver may be passive. Power may be supplied to the wake-up receiver 112 by using the terminal device 110. Whatever power supply manner, the wake-up receiver 112 greatly reduces power consumption compared with the primary receiver 114. For example, the wake-up receiver 112 may implement power consumption less than 1 milliwatt, which is far less than power consumption of dozens to hundreds of milliwatts of the primary receiver 114. The wake-up receiver 112 may be combined with the terminal device 110, as an additional module of the receiver of the terminal device 110, or may be separately used as a wake-up function module of the terminal device 110.

As shown in FIG. 1 (a), the primary receiver 114 is in an off state (OFF) or a deep sleep state (deep sleep). The wake-up receiver 112 receives the wake-up signal and determines, according to an indication of the wake-up signal, whether the primary receiver 114 needs to be woken-up. If the primary receiver 114 needs to be woken-up, the network device may transmit a wake-up signal to the wake-up receiver 112, and the wake-up receiver 112 wakes up the primary receiver 114 after receiving the wake-up signal. Otherwise, the primary receiver 114 maintains an off state.

In some embodiments, when a wake-up signal is transmitted, it indicates waking up; and when the wake-up signal is not transmitted, it indicates not waking up.

In some embodiments, when a wake-up signal that carries wake-up indication is transmitted, it indicates waking up. As shown in FIG. 1 (b), the wake-up signal carries the wake-up indication. After the wake-up receiver 112 receives the wake-up signal, the wake-up receiver 112 wakes up the primary receiver 114, and the primary receiver 114 is in an on (ON) state after being woken up.

When the wake-up signal that carries no wake-up indication is transmitted, it indicates not waking up. As shown in FIG. 1 (a), the wakeup signal carries the no wake-up indication. After receiving the wake-up signal, the wake-up receiver 112 does not wake up the primary receiver 114, and the primary receiver 114 maintains an off state.

Next, status adjustment of the search space switching timer is described.

In embodiments of this application, the search space switching timer may be referred to as a timer for short. When the timer is running, the timer normally times, for example timing in an order of 1, 2, 3, 4...The adjustment of the timer status includes at least one of the following: suspending, restoring, stopping, and restarting.

Suspending indicates that the timer temporarily stops at a certain timing position, and does not continue timing, for example, the timer stops when the timing reaches 3, and does not continue timing.

Restoring indicates that the timer continues timing after the suspending position, for example, the timer stops when the timing reaches 3. After restoring, the timer starts timing from 4.

Stopping indicates that the timer ends. For example, the timer ends at 4.

Restarting indicates that the timer starts timing again from 1. For example, the timer suspends when the timing reaches 3. After restarting, the timer starts timing again from 1. For another example, the timer expires and stops, and starts timing again from 1 after restarting.

FIG. 2 shows a schematic diagram of a communications system 100 according to an example embodiment of this application. The communications system 100 includes a terminal device 110 and a network device 120.

The terminal device 110 in this application is referred to as user equipment (User Equipment, UE), an access terminal, a user unit, a user station, a mobile station, a mobile platform, a remote station, a remote terminal, a mobile device, a user terminal, a terminal, a wireless communications device, a user agent, and a user apparatus. The terminal includes but is not limited to: a handheld device, a wearable device, an in-vehicle device, an Internet of Things device, and the like, for example, a mobile phone, a tablet computer, an electronic book reader, a laptop computer, a desktop computer, a television, a game machine, a Mobile Internet Device (Mobile Internet Device, MID), an Augmented Reality (Augmented Reality, AR) terminal, a Virtual Reality (Virtual Reality, VR) terminal and a Mixed Reality (Mixed Reality, MR) terminal, a wearable device, a handle, an electronic label, a controller, a wireless terminal in industrial control (Industrial Control), a wireless terminal in self driving (Self Driving), a wireless terminal in remote medical (Remote Medical), a wireless terminal in smart grid (Smart Grid), a wireless terminal in transportation safety (Transportation Safety), a wireless terminal in smart city (Smart City), a wireless terminal in smart Home (Smart Home), a wireless terminal in remote medical surgery (Remote Medical Surgery), a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a set top box (Set Top Box, STB), a customer premise equipment (Customer Premise Equipment, CPE), and the like.

The network device 120 in this application provides a wireless communications function. The network device 120 includes but is not limited to an evolved NodeB (Evolved Node B, eNB), a Radio Network Controller (Radio Network Controller, RNC), a node B (Node B, NB), a base station controller (Base Station Controller, BSC), a base transceiver station (Base Transceiver Station, BTS), a home base station (for example, Home Evolved Node B, or Home Node B, HNB), a baseband unit (Baseband Unit, BBU), an access point (Access point, AP), a wireless relay node, a wireless backhaul node, a transmission point (Transmission Point, TP) or a transmission/reception point (Transmission/Reception Point, TRP) in a Wi-Fi system. Alternatively, the network device 120 may be a next generation node B (Next Generation Node B, gNB) or a transmission point (TRP or TP) in a 5G mobile communications system, or one or a group (including multiple antenna panels) of antenna panels in a base station of a 5G system. Alternatively, the network device 120 may be a network node forming the gNB or the transmission point, such as a baseband unit (BBU) or a distributed unit (Distributed Unit, DU), or a base station in a B5G mobile communications system or a 6G mobile communications system, or a Core Network (Core Network, CN), a Fronthaul (Fronthaul), a Backhaul (Backhaul), a Radio Access Network (Radio Access Network, RAN), a network slice, or a serving cell, a primary cell (Primary Cell, PCell), a primary secondary cell (Primary Secondary Cell, PSCell), a special cell (Special Cell, SpCell), a secondary cell (Secondary Cell, SCell), a neighboring cell, or the like of a terminal device.

The terminal device 110 communicates with the network device 120 by using an air interface technology, for example, a Uu interface.

For example, there are two communication scenarios between the terminal device 110 and the network device 120: an uplink communication scenario and a downlink communication scenario. Uplink communication refers to the terminal device 110 transmitting a signal to the network device 120. Downlink communication refers to the network device 120 transmitting a signal to the terminal device 110.

The technical solutions provided in the embodiments of this application may be applied to various communications systems, for example, a GSM system, a CDMA system, a WCDMA system, a GPRS, an LTE system, a LTE-A system, an LTE frequency division duplex (Frequency Division Duplex, FDD) system, an LTE time division duplex (Time-Division Duplex, TDD) system, a UMTS, a Worldwide Interoperability for Microwave Access (Worldwide Interoperability for Microwave Access, WiMAX) communications system, a 5G mobile communications system, an NR system, an evolved system of an NR system, a LTE-U system, a NR-U system, a NTN system, a non-NTN system, a WLAN, a Wi-Fi system, a cellular Internet of Things system, and a cellular passive Internet of Things system, and may also be applicable to an evolved system of a 5G NR system, or may be applicable to a B5G system, a 6G system, and a subsequent evolved system.

In some embodiments of this application, "NR" may also be referred to as a 5G NR system or a 5G system. The 5G mobile communications system may include Non-StandAlone (Non-StandAlone, NSA) and/or StandAlone (StandAlone, SA).

The technical solutions provided in the embodiments of this application may be further applied to a Machine Type Communication (Machine Type Communication, MTC), an Long Term Evolution-Machine (Long Term Evolution-Machine, LTE-M), a Device to Device (Device to Device, D2D) network, a Machine to Machine (Machine to Machine, M2M) network, an Internet of Things (Internet of Things, IoT) network, or another network. The IoT network may include, for example, a vehicle network. A communication manner in the Internet of Vehicles system is collectively referred to as a vehicle to X (Vehicle to X, V2X, X may represent anything). For example, the V2X may include: vehicle to vehicle (Vehicle to Vehicle, V2V) communication, vehicle to infrastructure (Vehicle to Infrastructure, V2I) communication, vehicle to pedestrian communication (Vehicle to Pedestrian, V2P), or vehicle to network (Vehicle to Network, V2N) communication.

For a terminal device having a primary receiver, a primary receiver is used to monitor a PDCCH, and a search space switching timer is configured to indicate a time for switching a SSSG, where the SSSG is a search space used when the primary receiver performs monitoring. In a related technology, after a wake-up receiver with lower power consumption is configured in a terminal device, a wake-up receiver is used to monitor a wake-up signal during a period in which a PDCCH does not need to be monitored. However, in a period when the wake-up receiver monitors the wake-up signal, the search space switching timer is always in a running status, which may result in timeout of the search space switching timer, and the search space switching timer instructs to switch a SSSG in a case in which the monitoring time of the primary receiver is not enough, resulting in that monitoring time requirement of the primary receiver on a target SSSG cannot be met. Therefore, how to process the search space switching timer in the running status during monitoring the wake-up signal, and how to process the search space switching timer after receiving the LP-WUS signal are problems that need to be solved. Therefore, an embodiment of this application provides a method for adjusting a timer status.

FIG. 3 shows a flowchart of a method for adjusting a timer status according to an example embodiment of this application. The method is executed by a terminal device, the terminal device includes a first receiver and a second receiver, and operating energy consumption of the first receiver is lower than operating energy consumption of the second receiver. The method includes step 310.

In step 310, a status of the first timer is adjusted based on a monitoring status of the first receiver.

The first timer is configured to indicate a time for switching a SSSG, and the SSSG is a search space used when the second receiver performs monitoring.

In some embodiments, the first receiver includes a LP-WUR or a WUR, the second receiver is a primary receiver (also referred to as an NR receiver), and the first timer is a search space switching timer (searchSpaceSwitchTimer).

In some embodiments, the first timer is suspended when the first receiver monitors a first signal. The first signal is used to instruct the first receiver to wake up the second receiver.

In some embodiments, the first receiver receives a first signal, and the first signal includes a LP-WUS or a WUS. The first signal is also referred to as a wake-up signal.

The first timer is suspended during monitoring of the first signal by the first receiver, so that the first timer is not always in a running status, thereby reducing or avoiding a problem that a timeout is caused since the first timer is still in the running status when the second receiver is not in a monitoring status or is not in a working status.

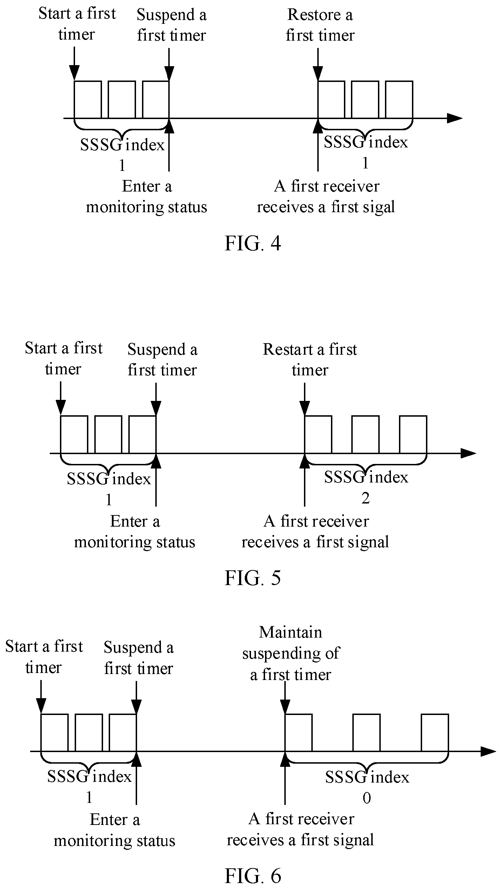

FIG. 4 shows a schematic diagram of a method for adjusting a timer status according to an example embodiment of this application. The terminal device switches a SSSG after receiving a search space switching instruction, for example, switching to a SSSG index 1 or a SSSG index 2, and starts the first timer. Alternatively, the terminal device resets the first timer after receiving a parameter value of the first timer, and starts the first timer.

After the first timer is started, the first timer is in the running status. When the first receiver enters a monitoring status (monitoring the first signal), the first timer is suspended; and/or when the second receiver exits the monitoring status, the first timer is suspended. Generally, when the first receiver enters the monitoring status, the second receiver exits the monitoring status.

In some embodiments, the first timer is restored when the first receiver receives a first signal. The first signal is used to instruct the first receiver to wake up the second receiver.

In a case in which the terminal device switches to a status of monitoring a PDCCH by the second receiver (Main Radio PDCCH monitoring), the first timer is restored. For example, the first receiver receives the first signal, wakes up the second receiver for monitoring based on the first signal; and in this case, the first timer is restored.

When the first receiver receives the first signal, the first timer is restored, so that the first timer is not always in the running status, and timing is continued at a proper time, thereby reducing or avoiding a problem that a timeout is caused since the first timer is still in the running status when the second receiver is not in the monitoring status or is not in the working status.

In some embodiments, the method further includes: waking up the second receiver to monitor a PDCCH on a first SSSG after the first receiver receives the first signal. The first SSSG is a SSSG on which the second receiver monitors a PDCCH before the first timer is suspended.

As shown in FIG. 4, after the first receiver (wake-up receiver) receives the first signal, the first timer is restored, that is, the first timer continues timing from a previous suspending instant. The first receiver wakes up the second receiver to continue monitoring the PDCCH on the first SSSG. The first SSSG is a SSSG on which the second receiver monitors the PDCCH before the first timer is suspended. For example, the first SSSG is the SSSG index 1 (SSSG index 1) before the suspension, and is also the SSSG index 1 (SSSG index 1) after the restoring.

By wakening up the second receiver to continue monitoring the PDCCH on the first SSSG, time for monitoring the PDCCH by the second receiver is more reasonable, and a case in which a scheduling requirement of a delay-sensitive service cannot be met due to insufficient monitoring time is reduced.

When the first receiver performs monitoring, there are two manners of adjusting the first timer: suspending the first timer, or stopping the first timer. The following separately describes the two manners.

Manner 1: When the first receiver performs monitoring, the first timer is suspended. The first timer is adjusted based on the first SSSG and the second SSSG after the first receiver receives the first signal.

In some embodiments, the status of the first timer is adjusted based on the first SSSG and the second SSSG when the first receiver receives the first signal.

The first signal is used to instruct the first receiver to wake up the second receiver. The first SSSG is a SSSG on which the second receiver monitors a PDCCH before the first timer is suspended, and the second SSSG is a SSSG on which the second receiver monitors a PDCCH after the first receiver receives the first signal.

In a case in which the first receiver receives the first signal, a status of the first timer is adjusted based on the first SSSG and the second SSSG, which can meet different requirements in different scenarios and meet an actual requirement.

In some embodiments, the first SSSG and the second SSSG are the same or different, and the first timer is adjusted based on SSSG indexes respectively corresponding to the first SSSG and the second SSSG.

In some embodiments, the first timer is restored based on the first SSSG and the second SSSG when the first receiver receives the first signal.

In some embodiments, when the first receiver receives the first signal, the first timer is restored based on the second SSSG being the first index SSSG or the second index SSSG, and the second SSSG is the same as the first SSSG.

As shown in FIG. 4, because the second SSSG is the first index SSSG, corresponds to the SSSG index 1 (SSSG index 1), and the first SSSG is also the first index SSSG, corresponds to the SSSG index 1 (SSSG index 1), the first timer is restored when the first receiver (wake-up receiver) receives the first signal.

In a case in which the second SSSG is the first index SSSG or the second index SSSG, and the second SSSG is the same as the first SSSG, the first timer is restored, so that the first timer continues timing, thereby meeting a monitoring time requirement of the second receiver on the SSSG.

In some embodiments, the first timer is restarted based on the first SSSG and the second SSSG when the first receiver receives the first signal.

In some embodiments, when the first receiver receives the first signal, the first timer is restarted based on the second SSSG being the first index SSSG or the second index SSSG, and the second SSSG is different from the first SSSG.

FIG. 5 shows a schematic diagram of a method for adjusting a timer status according to an example embodiment of this application. After the first timer is started, the first timer is in the running status. When the first receiver enters a monitoring status (monitoring the first signal), the first timer is suspended; and/or when the second receiver exits the monitoring status, the first timer is suspended. Generally, when the first receiver enters the monitoring status, the second receiver exits the monitoring status.

As shown in FIG. 5, when the first receiver (wake-up receiver) receives the first signal, the first timer is restarted based on that the second SSSG is the second index SSSG, corresponds to the SSSG index 2 (SSSG index 2), the first SSSG is the first index SSSG, corresponds to the SSSG index 1 (SSSG index 1), and the second SSSG is different from the first SSSG.

In a case in which the second SSSG is the first index SSSG or the second index SSSG, and the second SSSG is different from the first SSSG, the first timer is restarted, so that the first timer performs retiming to meet a monitoring time requirement of the second receiver on different SSSGs.

In some embodiments, suspending of the first timer is maintained based on the first SSSG and the second SSSG when the first receiver receives the first signal.

In some embodiments, when the first receiver receives the first signal, suspending of the first timer is maintained based on the second SSSG being a third index SSSG.

In some embodiments, the first index SSSG and the second index SSSG are SSSGs with a more intensive PDCCH monitoring occasion than the third index SSSG.

FIG. 6 shows a schematic diagram of a method for adjusting a timer status according to an example embodiment of this application. After the first timer is started, the first timer is in the running status. When the first receiver enters the monitoring status (monitoring the first signal), the first timer is suspended; and/or when the second receiver exits the monitoring status, the first timer is suspended. Generally, when the first receiver enters the monitoring status, the second receiver exits the monitoring status.

As shown in FIG. 6, in a case in which the first receiver (wake-up receiver) receives the first signal, based on that the second SSSG is the third index SSSG, corresponding to the SSSG index 0 (SSSG index 0), suspending of the first timer is maintained. A PDCCH monitoring occasion corresponding to the SSSG index 0 is more sparse than a PDCCH monitoring occasion corresponding to the SSSG index 1.

In a case in which the first receiver receives the first signal, based on that the second SSSG is the third index SSSG, suspending of the first timer is maintained. A PDCCH monitoring occasion corresponding to the third index SSSG is relatively sparse, and the first timer does not need to continue timing.

In some embodiments, the second SSSG is configured by a network device by using configuration signaling.

Manner 2: when the first receiver performs monitoring, the first timer is stopped. The first timer is adjusted based on the third SSSG after the first receiver receives the first signal.

In some embodiments, the first timer is stopped when the first receiver monitors the first signal. The first signal is used to instruct the first receiver to wake up the second receiver.

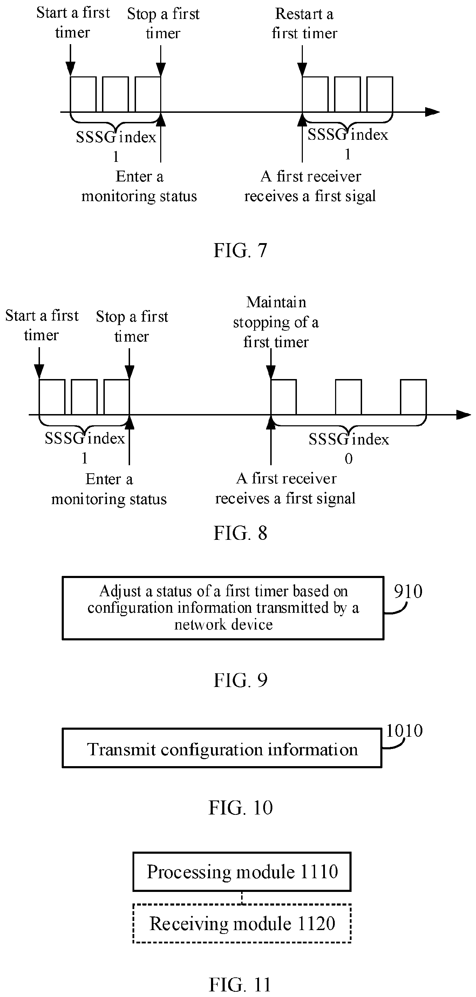

FIG. 7 shows a schematic diagram of a method for adjusting a timer status according to an example embodiment of this application. The terminal device switches a SSSG when receiving the search space switching instruction, for example, switching to the SSSG index 1 or the SSSG index 2, and starts the first timer. Alternatively, the terminal device resets the first timer after receiving a parameter value of the first timer, and starts the first timer.

After the first timer is started, the first timer is in the running status. When the first receiver enters the monitoring status (monitoring the first signal), the first timer is stopped; and/or when the second receiver exits the monitoring status, the first timer is stopped. Generally, when the first receiver enters the monitoring status, the second receiver exits the monitoring status.

The first timer is stopped during monitoring of the first signal by the first receiver, so that the first timer is not always in a running status, thereby reducing or avoiding a problem that a timeout is caused since the first timer is still in the running status when the second receiver is not in a monitoring status or is not in a working status.

In some embodiments, the status of the first timer is adjusted based on the third SSSG when the first receiver receives the first signal.

The first signal is used to instruct the first receiver to wake up the second receiver, and the third SSSG is a SSSG on which the second receiver monitors a PDCCH after the first receiver receives the first signal.

In some embodiments, when the first receiver receives the first signal, the first timer is restarted based on the third SSSG being the first index SSSG or the second index SSSG.

As shown in FIG. 7, in a case in which the first receiver (wake-up receiver) receives the first signal, the first timer is restarted based on that the third SSSG is the first index SSSG, and corresponds to the SSSG index 1 (SSSG index 1).

In some embodiments, when the first receiver receives the first signal, the first timer is stopped based on the third SSSG being the third index SSSG.

In some embodiments, the first index SSSG and the second index SSSG are SSSGs with a more intensive PDCCH monitoring occasion than the third index SSSG.

FIG. 8 shows a schematic diagram of a method for adjusting a timer status according to an example embodiment of this application. In a case in which the first receiver receives the first signal, based on that the third SSSG is the third index SSSG, corresponding to the SSSG index 0 (SSSG index 0), stopping of the first timer is maintained. A PDCCH monitoring occasion corresponding to the SSSG index 0 is more sparse than a PDCCH monitoring occasion corresponding to the SSSG index 1.

When the first receiver (wake-up receiver) receives the first signal, the status of the first timer is adjusted based on the SSSG index corresponding to the third SSSG, so that the first timer is not always in the running status, and the first timer is restarted or stopping of the first timer is maintained according to different SSSG indexes, so as to meet a monitoring time requirement of the primary receiver.

In some embodiments, the third SSSG is configured by the network device by using configuration signaling.

In some embodiments, the configuration signaling includes at least one of the following:

RRC signaling; a Medium Access Control Control Element (Medium Access Control Control Element, MAC CE); a PDCCH; or a first signal. The first signal is used to instruct the first receiver to wake up the second receiver.

The proper configuration signaling is used in different cases to meet the configuration signaling requirements in different actual scenarios.

In conclusion, according to the method provided in this embodiment, the status of the first timer is adjusted based on the monitoring status of the first receiver. The first timer is configured to indicate a time for switching a SSSG, and the SSSG is a search space used when the second receiver performs monitoring. Based on a monitoring status of the first receiver, the first timer is restored, or the first timer is restarted, or a status of the first timer remains unchanged, so that the first timer is not always in a running status, thereby reducing or avoiding the problem that a timeout is caused since the first timer is still in the running status when the second receiver is not in a monitoring status or is not in a working status, and meeting a monitoring time requirement of the primary receiver.

FIG. 9 shows a flowchart of a method for adjusting a timer status according to an example embodiment of this application. The method is executed by a terminal device, the terminal device includes a first receiver and a second receiver, and operating energy consumption of the first receiver is lower than operating energy consumption of the second receiver. The method includes step 910.

In step 910, a status of the first timer is adjusted based on configuration information transmitted by a network device.

The first timer is configured to indicate a time for switching a SSSG, and the SSSG is a search space used when the second receiver performs monitoring.

In some embodiments, the first receiver is a LP-WUR or a WUR, the second receiver is a primary receiver (also referred to as an NR receiver), and the first timer is a search space switching timer (searchSpaceSwitchTimer).

In some embodiments, the first receiver is configured to receive a first signal, and the first signal includes a LP-WUS or a WUS. The first signal is also referred to as a wake-up signal.

In some embodiments, the configuration information is carried in the first signaling, and a field in the first signaling is used to instruct how to adjust a status of the first timer.

In some embodiments, the first signaling includes at least one of RRC signaling, MAC CE, or PDCCH.

In some embodiments, adjusting the status of the first timer includes at least one of the following: stopping, suspending, restoring, or restarting, and two bits in the field are used to instruct to adjust the status of the first timer.

For example, when a bit value of the two bits is 00, it indicates stopping. When the bit value is 01, it indicates suspending. When the bit value is 10, it indicates restoring. When the bit value is 11, it indicates restarting. For another example, when a bit value of the two bits is 00, it indicates restarting. When the bit value is 01, it indicates restoring. When the bit value is 10, it indicates suspending. When the bit value is 11, it indicates stopping.

In some embodiments, in a case in which the first timer is in a running status, adjusting the status of the first timer includes at least one of the following: stopping or suspending, and one bit in a field is used to instruct to adjust the status of the first timer.

For example, when the bit value of the bit is 0, it indicates stopping. When the bit value is 1, it indicates suspending. For another example, when the bit value of the bit is 0, it indicates suspending. When the bit value is 1, it indicates stopping.

In some embodiments, in a case in which the first timer is in a suspending status, the adjusting a status of the first timer includes at least one of the following: restoring or restarting, and one bit in a field is used to instruct to adjust the status of the first timer.

For example, when the bit value of the bit is 0, it indicates restoring. When the bit value is 1, it indicates restarting. For another example, when the bit value of the bit is 0, it indicates restarting. When the bit value is 1, it indicates restoring.

A bit value and how to adjust the status of the first timer accordingly are not limited in embodiments of this application.

In some embodiments, the configuration information is used to indicate a manner of adjusting a status of the first timer in a case in which the first receiver monitors the first signal. The first signal is used to instruct the first receiver to wake up the second receiver.

The terminal device switches a SSSG when receiving the search space switching instruction, for example, switching to the SSSG index 1 or the SSSG index 2, and starts the first timer. Alternatively, the terminal device resets the first timer after receiving the parameter value of the first timer, and starts the first timer. After the first timer is started, the first timer is in the running status. When the first receiver enters the monitoring status (monitoring the first signal), the status of the first timer is adjusted.

In some embodiments, in a case in which the first receiver monitors the first signal, a manner of adjusting the status of the first timer includes:
when the first receiver monitors the first signal, the first timer is stopped.

In some embodiments, in a case in which the first receiver monitors the first signal, a manner of adjusting the status of the first timer includes:
in a case in which the first receiver monitors the first signal, the first timer is suspended.

In some embodiments, in a case in which the first receiver monitors the first signal, a manner of adjusting the status of the first timer includes:
maintaining running of the first timer when the first receiver monitors the first signal.

The first timer is stopped, or the first timer is suspended or running of the first timer is maintained according to the configuration information transmitted by the network device, so as to meet a specific scenario requirement.

In some embodiments, the configuration information is used to indicate a manner of adjusting a status of the first timer, in a case in which the SSSG monitored by the first receiver after the first receiver receives the first signal is the same as the SSSG monitored by the first receiver before the first receiver monitors the first signal. The first signal is used to instruct the first receiver to wake up the second receiver.

In some embodiments, SSSG indexes corresponding to different SSSGs are the same or different. For example, the SSSG monitored by the first receiver after receiving the first signal corresponds to the SSSG index 1 (SSSG index 1), the SSSG monitored by the first receiver before monitoring the first signal corresponds to the SSSG index 1 (SSSG index 1), and the two SSSGs are the same. Alternatively, the SSSG monitored by the first receiver after receiving the first signal corresponds to the SSSG index 2 (SSSG index 2), and the SSSG monitored by the first receiver before monitoring the first signal corresponds to the SSSG index 1 (SSSG index 1), where the two SSSGs are different.

In some embodiments, a manner of adjusting a status of the first timer in a case in which the SSSG monitored by the first receiver after the first receiver receives the first signal is the same as the SSSG monitored by the first receiver before the first receiver monitors the first signal includes:
restoring the first timer, in a case in which the SSSG monitored by the first receiver after the first receiver receives the first signal is the same as the SSSG monitored by the first receiver before the first receiver monitors the first signal.

In some embodiments, a manner of adjusting a status of the first timer in a case in which the SSSG monitored by the first receiver after the first receiver receives the first signal is the same as the SSSG monitored by the first receiver before the first receiver monitors the first signal includes:
restarting the first timer, in a case in which the SSSG monitored by the first receiver after the first receiver receives the first signal is the same as the SSSG monitored by the first receiver before the first receiver monitors the first signal.

The first timer is restored or restarted according to the configuration information transmitted by the network device, so as to meet a specific scenario requirement.

In conclusion, according to the method provided in this embodiment, a status of a first timer is adjusted based on configuration information transmitted by a network device. The first timer is configured to indicate a time for switching a SSSG, and the SSSG is a search space used when the second receiver performs monitoring. Based on the configuration information transmitted by the network device, the first timer is stopped, or the first timer is suspended, or a status of the first timer remains unchanged, or the first timer is restored, or the first timer is restarted, so that the first timer is not always in a running status, thereby reducing or avoiding a problem that a timeout is caused since the first timer is still in the running status when the second receiver is not in a monitoring status or is not in a working status, and meeting a monitoring time requirement of the primary receiver. In addition, the status of the first timer is adjusted according to the configuration information, and the terminal device is unnecessary to determine how to adjust the status of the first timer, thereby reducing implementation complexity of the terminal device.

FIG. 10 shows a flowchart of a method for transmitting configuration information according to an example embodiment of this application. The method is executed by a network device, and the method includes step 1010.

In step 1010, configuration information is transmitted.

The configuration information is used by the terminal device to adjust a status of a first timer. The first timer is configured to indicate a time for switching a SSSG. The SSSG is a search space used when the second receiver performs monitoring. The terminal device includes a first receiver and a second receiver. Operating energy consumption of the first receiver is lower than operating energy consumption of the second receiver.

In some embodiments, the configuration information is used to indicate a manner of adjusting a status of the first timer by the terminal device in a case in which the first receiver monitors the first signal. The first signal is used to instruct the first receiver to wake up the second receiver.

In some embodiments, in a case in which the first receiver monitors the first signal, a manner of adjusting the status of the first timer by the terminal device includes: in a case in which the first receiver monitors the first signal, the terminal device stops the first timer.

In some embodiments, in a case in which the first receiver monitors the first signal, a manner of adjusting the status of the first timer by the terminal device includes: in a case in which the first receiver monitors the first signal, the terminal device suspends the first timer.

In some embodiments, in a case in which the first receiver monitors the first signal, a manner of adjusting the status of the first timer by the terminal device includes: in a case in which the first receiver monitors the first signal, the terminal device maintains running of the first timer.

In some embodiments, the configuration information is used to indicate a manner of adjusting a status of the first timer by the terminal device, in a case in which the SSSG monitored by the first receiver after the first receiver receives the first signal is the same as the SSSG monitored by the first receiver before the first receiver monitors the first signal. The first signal is used to instruct the first receiver to wake up the second receiver.

In some embodiments, in a case the SSSG monitored by the first receiver after the first receiver receives the first signal is the same as the SSSG monitored by the first receiver before the first receiver monitors the first signal, a manner of adjusting the status of the first timer by the terminal device includes:
restoring the first timer by the terminal device, in a case that the SSSG monitored by the first receiver after the first receiver receives the first signal is the same as the SSSG monitored by the first receiver before the first receiver monitors the first signal.

In some embodiments, in a case the SSSG monitored by the first receiver after the first receiver receives the first signal is the same as the SSSG monitored by the first receiver before the first receiver monitors the first signal, a manner of adjusting the status of the first timer by the terminal device includes:
restarting the first timer by the terminal device, in a case the SSSG monitored by the first receiver after the first receiver receives the first signal is the same as the SSSG monitored by the first receiver before the first receiver monitors the first signal.

For specific implementation details of the foregoing configuration information transmitting method, one may refer to the embodiment shown in FIG. 9. Details are not described herein again.

In conclusion, according to the method provided in this embodiment, configuration information is transmitted, and the configuration information is used by the terminal device to adjust a status of a first timer. The first timer is configured to indicate a time for switching a SSSG. The SSSG is a search space used when the second receiver performs monitoring. The terminal device includes a first receiver and a second receiver. Operating energy consumption of the first receiver is lower than operating energy consumption of the second receiver. By transmitting configuration information, the terminal device stops the first timer, suspends the first timer, maintains the status of the first timer unchanged, restores the first timer, or restarts the first timer, so that the first timer is not always in the running status, thereby reducing or avoiding a problem of timeout of the first timer since the first timer is still in a running status when the second receiver is not in a monitoring status or is not in a working status, thus meeting a monitoring time requirement of the primary receiver.

In the foregoing embodiment, an embodiment corresponding to FIG. 3, an embodiment corresponding to FIG. 9, and an embodiment corresponding to FIG. 10 may be separately implemented, or may be implemented in combination, which is not limited in this application.

FIG. 11 shows a block diagram of an apparatus for adjusting a timer status according to an example embodiment of this application. The apparatus may be implemented as a terminal device by using software, hardware, or a combination thereof, or may be implemented as a part of the terminal device. The apparatus includes a first receiver and a second receiver. Operating energy consumption of the first receiver is lower than operating energy consumption of the second receiver. The apparatus includes at least one of a processing module 1110 and a receiving module 1120.

The processing module 1110 is configured to adjust a status of a first timer based on a monitoring status of a first receiver.

The first timer is configured to indicate a time for switching a SSSG, and the SSSG is a search space used when the second receiver performs monitoring.

In a possible design of this embodiment, the first receiver includes a LP-WUR or a WUR, the second receiver is a primary receiver (also referred to as an NR receiver), and the first timer is a search space switching timer (searchSpaceSwitchTimer).

In a possible design of this embodiment, when the first receiver monitors the first signal, the first timer is suspended. The first signal is used to instruct the first receiver to wake up the second receiver.

In a possible design of this embodiment, the first receiver receives a first signal, where the first signal includes LP-WUS or WUS. The first signal is also referred to as a wake-up signal.

The first timer is suspended during monitoring of the first signal by the first receiver, so that the first timer is not always in a running status, thereby reducing or avoiding a problem that a timeout is caused since the first timer is always in the running status when the second receiver is not in a monitoring status or is not in a working status.

FIG. 4 shows a schematic diagram of a method for adjusting a timer status according to an example embodiment of this application. After receiving the search space switching instruction, the apparatus for adjusting a timer status switches a SSSG, for example, switches to SSSG index 1 or SSSG index 2, and starts the first timer. Alternatively, the apparatus resets the first timer after receiving the parameter value of the first timer, and starts the first timer.

After the first timer is started, the first timer is in the running status. When the first receiver enters the monitoring status (monitoring the first signal), the first timer is suspended; and/or when the second receiver exits the monitoring status, the first timer is suspended. Generally, when the first receiver enters the monitoring status, the second receiver exits the monitoring status.

In a possible design of this embodiment, the first timer is restored when the first receiver receives the first signal. The first signal is used to instruct the first receiver to wake up the second receiver.

When the apparatus for adjusting a timer status switches to a status of monitoring the PDCCH by the second receiver (Main Radio PDCCH monitoring), the first timer is restored. For example, the first receiver receives the first signal, wakes up the second receiver for monitoring based on the first signal; and in this case, the first timer is restored.

When the first receiver receives the first signal, the first timer is restored, so that the first timer is not always in the running status, and the first timer continues timing at a proper time, thereby reducing or avoiding a problem that a timeout is caused since the first timer is still in the running status when the second receiver is not in the monitoring status or is not in the working status.

In a possible design of this embodiment, the processing module 1110 is further configured to wake the second receiver to monitor the PDCCH on the first SSSG after the first receiver receives the first signal. The first SSSG is a SSSG on which the second receiver monitors the PDCCH before the first timer is suspended.

As shown in FIG. 4, after the first receiver (wake-up receiver) receives the first signal, the first timer is restored, that is, the first timer continues timing from a previous suspending instant. The first receiver wakes up the second receiver to continue monitoring the PDCCH on the first SSSG. The first SSSG is a SSSG on which the second receiver monitors the PDCCH before the first timer is suspended. For example, the first SSSG is the SSSG index 1 (SSSG index 1) before the suspending, and is also the SSSG index 1 (SSSG index 1) after the restoring.

By wakening up the second receiver to continue monitoring the PDCCH on the first SSSG, time for monitoring the PDCCH by the second receiver is more reasonable, thereby reducing a case in which a scheduling requirement of a delay-sensitive service cannot be met due to insufficient monitoring time.

When the first receiver performs monitoring, there are two manners of adjusting the first timer: suspending the first timer, or stopping the first timer. The following separately describes the two manners.

Manner 1: when the first receiver performs monitoring, the first timer is suspended. The first timer is adjusted based on the first SSSG and the second SSSG after the first receiver receives the first signal.

In a possible design of this embodiment, when the first receiver receives the first signal, the status of the first timer is adjusted based on the first SSSG and the second SSSG.

The first signal is used to instruct the first receiver to wake up the second receiver. The first SSSG is a SSSG on which the second receiver monitors a PDCCH before the first timer is suspended, and the second SSSG is a SSSG on which the second receiver monitors a PDCCH after the first receiver receives the first signal.

In a case in which the first receiver receives the first signal, a status of the first timer is adjusted based on the first SSSG and the second SSSG, which can meet different requirements in different scenarios and meet an actual requirement.

In a possible design of this embodiment, the first SSSG and the second SSSG are the same or different, and the first timer is adjusted based on SSSG indexes respectively corresponding to the first SSSG and the second SSSG.

In a possible design of this embodiment, when the first receiver receives the first signal, the first timer is restored based on the first SSSG and the second SSSG.

In a possible design of this embodiment, when the first receiver receives the first signal, based on that the second SSSG being the first index SSSG or the second index SSSG and the second SSSG is the same as the first SSSG, the first timer is restored.

As shown in FIG. 4, because the second SSSG is the first index SSSG, corresponds to the SSSG index 1 (SSSG index 1), and the first SSSG is also the first index SSSG, corresponds to the SSSG index 1 (SSSG index 1), the first timer is restored when the first receiver (wake-up receiver) receives the first signal.

In a case in which the second SSSG is the first index SSSG or the second index SSSG, and the second SSSG is the same as the first SSSG, the first timer is restored, so that the first timer continues timing, and a monitoring time requirement of the second receiver on the SSSG is met.

In a possible design of this embodiment, when the first receiver receives the first signal, the first timer is restarted based on the first SSSG and the second SSSG.

In a possible design of this embodiment, when the first receiver receives the first signal, the first timer is restarted based on the second SSSG being the first index SSSG or the second index SSSG, and the second SSSG is different from the first SSSG.

FIG. 5 shows a schematic diagram of a method for adjusting a timer status according to an example embodiment of this application. After the first timer is started, the first timer is in the running status. When the first receiver enters the monitoring status (monitoring the first signal), the first timer is suspended; and/or when the second receiver exits the monitoring status, the first timer is suspended. Generally, when the first receiver enters the monitoring status, the second receiver exits the monitoring status.

As shown in FIG. 5, when the first receiver (wake-up receiver) receives the first signal, the first timer is restarted based on that the second SSSG is the second index SSSG, corresponds to the SSSG index 2 (SSSG index 2), the first SSSG is the first index SSSG, corresponds to the SSSG index 1 (SSSG index 1), and the second SSSG is different from the first SSSG.

In a case in which the second SSSG is the first index SSSG or the second index SSSG, and the second SSSG is different from the first SSSG, the first timer is restarted, so that the first timer performs retiming to meet a monitoring time requirement of the second receiver on different SSSGs.

In a possible design of this embodiment, when the first receiver receives the first signal, suspending of the first timer is maintained based on the first SSSG and the second SSSG.

In a possible design of this embodiment, when the first receiver receives the first signal, suspending of the first timer is maintained based on the second SSSG being a third index SSSG.

In a possible design of this embodiment, the first index SSSG and the second index SSSG are SSSGs with a more intensive PDCCH monitoring occasion than the third index SSSG.

FIG. 6 shows a schematic diagram of a method for adjusting a timer status according to an example embodiment of this application. After the first timer is started, the first timer is in the running status. When the first receiver enters the monitoring status (monitoring the first signal), the first timer is suspended; and/or when the second receiver exits the monitoring status, the first timer is suspended. Generally, when the first receiver enters the monitoring status, the second receiver exits the monitoring status.

As shown in FIG. 6, in a case in which the first receiver (wake-up receiver) receives the first signal, based on that the second SSSG is the third index SSSG, corresponding to the SSSG index 0 (SSSG index 0), suspending of the first timer is maintained. A PDCCH monitoring occasion corresponding to the SSSG index 0 is more sparse than a PDCCH monitoring occasion corresponding to the SSSG index 1.

In a case in which the first receiver receives the first signal, based on that the second SSSG is the third index SSSG, suspending of the first timer is maintained, and a PDCCH monitoring occasion corresponding to the third index SSSG is relatively sparse, and the first timer does not need to continue timing.

In a possible design of this embodiment, the second SSSG is configured by the apparatus for transmitting configuration information by using configuration signaling.

Manner 2: when the first receiver performs monitoring, the first timer is stopped. The first timer is adjusted based on the third SSSG after the first receiver receives the first signal.

In a possible design of this embodiment, when the first receiver monitors the first signal, the first timer is stopped. The first signal is used to instruct the first receiver to wake up the second receiver.

FIG. 7 shows a schematic diagram of a method for adjusting a timer status according to an example embodiment of this application. The apparatus for adjusting a timer status switches a SSSG when receiving the search space switching instruction, for example, switching to the SSSG index 1 or the SSSG index 2, and starts the first timer. Alternatively, the apparatus resets the first timer after receiving the parameter value of the first timer, and starts the first timer.

After the first timer is started, the first timer is in the running status. When the first receiver enters the monitoring status (monitoring the first signal), the first timer is stopped; and/or when the second receiver exits the monitoring status, the first timer is stopped. Generally, when the first receiver enters the monitoring status, the second receiver exits the monitoring status.

The first timer is stopped during monitoring of the first signal by the first receiver, so that the first timer is not always in a running status, thereby reducing or avoiding a problem that a timeout is caused since the first timer is still in the running status when the second receiver is not in a monitoring status or is not in a working status.

In a possible design of this embodiment, when the first receiver receives the first signal, the status of the first timer is adjusted based on the third SSSG.

The first signal is used to instruct the first receiver to wake up the second receiver, and the third SSSG is a SSSG on which the second receiver monitors the PDCCH after the first receiver receives the first signal.

In a possible design of this embodiment, when the first receiver receives the first signal, the first timer is restarted based on the third SSSG being the first index SSSG or the second index SSSG.

As shown in FIG. 7, in a case in which the first receiver (wake-up receiver) receives the first signal, the first timer is restarted based on that the third SSSG is the first index SSSG, and corresponds to the SSSG index 1 (SSSG index 1).

In a possible design of this embodiment, when the first receiver receives the first signal, stopping of the first timer is maintained based on that the third SSSG is the third index SSSG.

In a possible design of this embodiment, the first index SSSG and the second index SSSG are SSSGs with a more intensive PDCCH monitoring occasion than the third index SSSG.

FIG. 8 shows a schematic diagram of a method for adjusting a timer status according to an example embodiment of this application. In a case in which the first receiver receives the first signal, based on that the third SSSG is the third index SSSG, corresponding to the SSSG index 0 (SSSG index 0), stopping of the first timer is maintained. A PDCCH monitoring occasion corresponding to the SSSG index 0 is more sparse than a PDCCH monitoring occasion corresponding to the SSSG index 1.

When the first receiver (wake-up receiver) receives the first signal, the status of the first timer is adjusted based on the SSSG index corresponding to the third SSSG, so that the first timer is not always in the running status, and the first timer is restarted or stopping of the first timer is maintained according to different SSSG indexes, so as to meet a monitoring time requirement of the primary receiver.

In a possible design of this embodiment, the third SSSG is configured by the apparatus for transmitting configuration information by using configuration signaling.

In a possible design of this embodiment, the configuration signaling includes at least one of the following:

RRC signaling; MAC CE; a PDCCH; or a first signal, where the first signal is used to instruct the first receiver to wake up the second receiver.

The proper configuration signaling is used in different cases to meet the configuration signaling requirements in different actual scenarios.

In a possible design of this embodiment, the receiving module 1120 is configured to receive a first signal.

In this embodiment, the processing module 1110 may be split into at least one processing submodule, such as a first processing submodule and a second processing submodule. The first processing submodule is configured to adjust a status of the first timer when the first receiver monitors the first signal, and the second processing submodule is configured to adjust a status of the first timer when the first receiver receives the first signal. Alternatively, the first processing submodule is configured to adjust a status of the first timer when the first receiver receives the first signal, and the second processing submodule is configured to adjust a status of the first timer when the first receiver monitors the first signal. A function of different processing submodules is not limited in this embodiment.

In this embodiment, one processing module 1110 is used as an example for description, and a quantity of processing modules 1110 is not limited.

For a function description of the processing module 1110, one may refer to content of step 310 in the embodiment shown in FIG. 3.

For a function description of the receiving module 1120, one may refer to content of step 310 in the embodiment shown in FIG. 3.

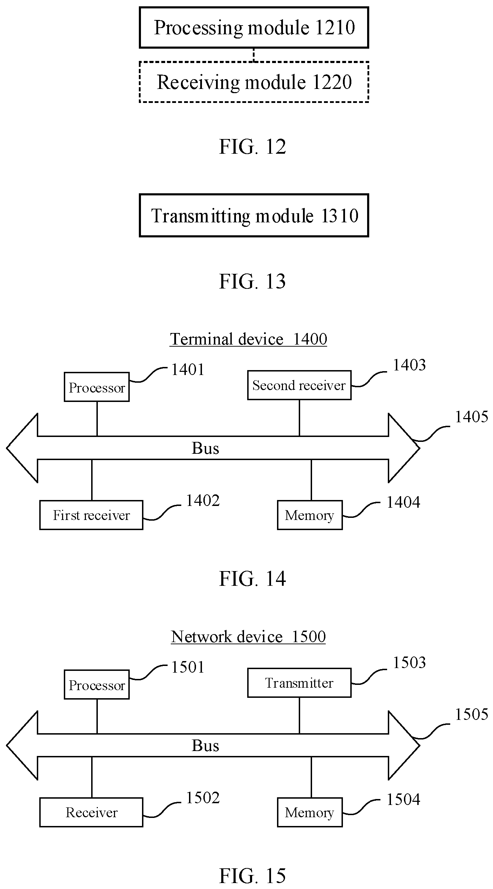

FIG. 12 shows a block diagram of an apparatus for adjusting a timer status according to an example embodiment of this application. The apparatus may be implemented as a terminal device by using software, hardware, or a combination thereof, or may be implemented as a part of the terminal device. The apparatus incudes a first receiver and a second receiver. Operating energy consumption of the first receiver is lower than operating energy consumption of the second receiver. The apparatus includes at least one of a processing module 1210 and a receiving module 1220.

The processing module 1210 is configured to adjust a status of a first timer based on configuration information transmitted by an apparatus for transmitting configuration information.

The first timer is configured to indicate a time for switching a SSSG, and the SSSG is a search space used when the second receiver performs monitoring.

In a possible design of this embodiment, the first receiver is a LP-WUR or a WUR, the second receiver is a primary receiver (also referred to as an NR receiver), and the first timer is a search space switching timer (searchSpaceSwitchTimer).

In a possible design of this embodiment, the first receiver is configured to receive a first signal, and the first signal includes a LP-WUS or a WUS. The first signal is also referred to as a wake-up signal.

In a possible design of this embodiment, the configuration information is carried in first signaling, and a field in the first signaling is used to instruct how to adjust a status of the first timer.

In a possible design of this embodiment, the first signaling includes at least one of RRC signaling, MAC CE or a PDCCH.

In a possible design of this embodiment, the adjusting the status of the first timer includes at least one of the following: stopping, suspending, restoring, or restarting, and two bits in the field are used to instruct to adjust the status of the first timer.

For example, when a bit value of the two bits is 00, it indicates stopping. When the bit value is 01, it indicates suspending. When the bit value is 10, it indicates restoring. When the bit value is 11, it indicates restarting. For another example, when a bit value of the two bits is 00, it indicates restarting. When the bit value is 01, it indicates restoring. When the bit value is 10, it indicates suspending. When the bit value is 11, it indicates stopping.

In a possible design of this embodiment, in a case in which the first timer is in the running status, adjusting the status of the first timer includes at least one of the following: stopping or suspending, and one bit in a field is used to instruct to adjust the status of the first timer.

For example, when the bit value of the bit is 0, it indicates stopping. When the bit value is 1, it indicates suspending. For another example, when the bit value of the bit is 0, it indicates suspending. When the bit value is 1, it indicates stopping.

In a possible design of this embodiment, in a case in which the first timer is in a suspending status, the adjusting a status of the first timer includes at least one of the following: restoring or restarting, and one bit in a field is used to instruct to adjust the status of the first timer.

For example, when the bit value of the bit is 0, it indicates restoring. When the bit value is 1, it indicates restarting. For another example, when the bit value of the bit is 0, it indicates restarting. When the bit value is 1, it indicates restoring.

In this embodiment, a bit value and how to adjust the status of the first timer accordingly are not limited.

In a possible design of this embodiment, the configuration information is used to indicate a manner of adjusting a status of the first timer when the first receiver monitors the first signal. The first signal is used to instruct the first receiver to wake up the second receiver.

The apparatus for adjusting a timer status switches a SSSG when receiving the search space switching instruction, for example, switching to the SSSG index 1 or the SSSG index 2, and starts the first timer. Alternatively, the apparatus resets the first timer after receiving a parameter value of the first timer, and starts the first timer. After the first timer is started, the first timer is in the running status. When the first receiver enters the monitoring status (monitoring the first signal), the status of the first timer is adjusted.

In a possible design of this embodiment, a manner of adjusting a status of the first timer in a case in which the first receiver monitors the first signal includes:
stopping the first timer, when the first receiver monitors the first signal.

In a possible design of this embodiment, a manner of adjusting a status of the first timer in a case in which the first receiver monitors the first signal includes:
suspending the first timer, in a case in which the first receiver monitors the first signal.

In a possible design of this embodiment, a manner of adjusting a status of the first timer in a case in which the first receiver monitors the first signal includes:
maintaining running of the first timer, when the first receiver monitors the first signal.

The first timer is stopped, or the first timer is suspended, or running of the first timer is maintained according to configuration information transmitted by the apparatus for transmitting configuration information, so as to meet a specific scenario requirement.

In a possible design of this embodiment, the configuration information is used to indicate a manner of adjusting the status of the first timer in a case in which the SSSG monitored by the first receiver after the first receiver receives the first signal is the same as the SSSG monitored by the first receiver before the first receiver monitors the first signal. The first signal is used to instruct the first receiver to wake up the second receiver.

In a possible design of this embodiment, SSSG indexes corresponding to different SSSGs are the same or different. For example, a SSSG monitored by the first receiver after receiving the first signal corresponds to SSSG index 1 (SSSG index 1), and a SSSG monitored by the first receiver before monitoring the first signal corresponds to SSSG index 1 (SSSG index 1), and two SSSGs are the same. Alternatively, the SSSG monitored by the first receiver after receiving the first signal corresponds to a SSSG index 2 (SSSG index 2), and the SSSG monitored by the first receiver before monitoring the first signal corresponds to a SSSG index 1 (SSSG index 1), and two SSSGs are different.

In a possible design of this embodiment, a manner of adjusting the status of the first timer in a case in which the SSSG monitored by the first receiver after the first receiver receives the first signal is the same as the SSSG monitored by the first receiver before the first receiver monitors the first signal includes:

restoring the first timer, in a case in which the SSSG monitored by the first receiver after the first receiver receives the first signal is the same as the SSSG monitored by the first receiver before the first receiver monitors the first signal.

In a possible design of this embodiment, a manner of adjusting the status of the first timer in a case in which the SSSG monitored by the first receiver after the first receiver receives the first signal is the same as the SSSG monitored by the first receiver before the first receiver monitors the first signal includes:
restarting the first timer, in a case in which the SSSG monitored by the first receiver after the first receiver receives the first signal is the same as the SSSG monitored by the first receiver before the first receiver monitors the first signal.

The first timer is restored or the first timer is restarted according to the configuration information transmitted by the apparatus for transmitting configuration information, so as to meet a specific scenario requirement.

In a possible design of this embodiment, the receiving module 1220 is configured to receive a first signal.

In this embodiment, the processing module 1210 may be split into at least one processing submodule, such as a first processing submodule and a second processing submodule. The first processing submodule is configured to: when the first receiver monitors the first signal, adjust a status of the first timer; and the second processing submodule is configured to: when the SSSG monitored by the first receiver after the first receiver receives the first signal is the same as the SSSG monitored by the first receiver before the first receiver monitors the first signal, adjust the status of the first timer. Alternatively, the first processing submodule is configured to: when the SSSG monitored by the first receiver after the first receiver receives the first signal is the same as the SSSG monitored by the first receiver before the first receiver monitors the first signal, adjust the status of the first timer; and the second processing submodule is configured to: when the first receiver monitors the first signal, adjust a status of the first timer. A function of different processing submodules is not limited in this embodiment.

In this embodiment, one processing module 1210 is used as an example for description, and a quantity of processing modules 1210 is not limited.

For a function description of the processing module 1210, one may refer to content of step 910 in the embodiment shown in FIG. 9.

For a function description of the receiving module 1220, one may refer to content of step 910 in the embodiment shown in FIG. 9.

FIG. 13 shows a block diagram of an apparatus for transmitting configuration information according to an example embodiment of this application. The apparatus may be implemented as a network device by using software, hardware, or a combination thereof, or may be implemented as a part of a network device. The apparatus includes a transmitting module 1310.

The transmitting module 1310 is configured to transmit configuration information.

The configuration information is used to adjust a status of a first timer by an apparatus for adjusting a timer status. The first timer is configured to indicate a time for switching a SSSG. The SSSG is a search space used when the second receiver performs monitoring. The apparatus for adjusting a timer status includes a first receiver and a second receiver. Operating energy consumption of the first receiver is lower than operating energy consumption of the second receiver.

In a possible design of this embodiment, the first receiver is a LP-WUR or a WUR, the second receiver is a primary receiver (also referred to as an NR receiver), and the first timer is a search space switching timer (searchSpaceSwitchTimer).

In a possible design of this embodiment, the first receiver is configured to receive a first signal, and the first signal includes a LP-WUS or a WUS. The first signal is also referred to as a wake-up signal.

In a possible design of this embodiment, the configuration information is carried in first signaling, and a field in the first signaling is used to instruct how to adjust a status of the first timer.

In a possible design of this embodiment, the first signaling includes at least one of RRC signaling, MAC CE, or a PDCCH.

In a possible design of this embodiment, the adjusting the status of the first timer includes at least one of the following: stopping, suspending, restoring, or restarting, and two bits in the field are used to instruct to adjust the status of the first timer.

For example, when a bit value of the two bits is 00, it indicates stopping. When the bit value is 01, it indicates suspending. When the bit value is 10, it indicates restoring. When the bit value is 11, it indicates restarting. For another example, when a bit value of the two bits is 00, it indicates restarting. When the bit value is 01, it indicates restoring. When the bit value is 10, it indicates suspending. When the bit value is 11, it indicates stopping.

In a possible design of this embodiment, in a case in which the first timer is in the running status, adjusting the status of the first timer includes at least one of the following: stopping or suspending, and one bit in a field is used to instruct to adjust the status of the first timer.

For example, when the bit value of the bit is 0, it indicates stopping. When the bit value is 1, it indicates suspending. For another example, when the bit value of the bit is 0, it indicates suspending. When the bit value is 1, it indicates stopping.

In a possible design of this embodiment, in a case in which the first timer is in a suspending status, the adjusting a status of the first timer includes at least one of the following: restoring or restarting, and one bit in a field is used to instruct to adjust the status of the first timer.

For example, when the bit value of the bit is 0, it indicates restoring. When the bit value is 1, it indicates restarting. For another example, when the bit value of the bit is 0, it indicates restarting. When the bit value is 1, it indicates restoring.

In this embodiment, a bit value and how to adjust the status the first timer accordingly are not limited.

In a possible design of this embodiment, the configuration information is used to indicate a manner of adjusting a status of the first timer when the first receiver monitors the first signal. The first signal is used to instruct the first receiver to wake up the second receiver.

The apparatus for adjusting a timer status switches a SSSG when receiving the search space switching instruction, for example, switching to the SSSG index 1 or the SSSG index 2, and starts the first timer. Alternatively, the apparatus resets the first timer after receiving the parameter value of the first timer, and starts the first timer. After the first timer is started, the first timer is in the running status. When the first receiver enters the monitoring status (monitoring the first signal), the status of the first timer is adjusted.

In a possible design of this embodiment, a manner of adjusting a status of the first timer in a case in which the first receiver monitors the first signal includes:
stopping the first timer, when the first receiver monitors the first signal.

In a possible design of this embodiment, a manner of adjusting a status of the first timer in a case in which the first receiver monitors the first signal includes:
suspending the first timer, in a case in which the first receiver monitors the first signal.

In a possible design of this embodiment, a manner of adjusting a status of the first timer in a case in which the first receiver monitors the first signal includes:
maintaining running of the first timer when the first receiver monitors the first signal.

The first timer is stopped or the first timer is suspended or running of the first timer is maintained according to the configuration information transmitted by the apparatus for transmitting configuration information, so as to meet a specific scenario requirement.

In a possible design of this embodiment, the configuration information is used to indicate a manner of adjusting the status of the first timer in a case in which the SSSG monitored by the first receiver after the first receiver receives the first signal is the same as the SSSG monitored by the first receiver before the first receiver monitors the first signal. The first signal is used to instruct the first receiver to wake up the second receiver.

In a possible design of this embodiment, SSSG indexes corresponding to different SSSGs are the same or different. For example, a SSSG monitored by the first receiver after receiving the first signal corresponds to SSSG index 1 (SSSG index 1), and a SSSG monitored by the first receiver before monitoring the first signal corresponds to SSSG index 1 (SSSG index 1), and two SSSGs are the same. Alternatively, the SSSG monitored by the first receiver after receiving the first signal corresponds to a SSSG index 2 (SSSG index 2), and the SSSG monitored by the first receiver before monitoring the first signal corresponds to a SSSG index 1 (SSSG index 1), and two SSSGs are different.

In a possible design of this embodiment, a manner of adjusting the status of the first timer in a case in which the SSSG monitored by the first receiver after the first receiver receives the first signal is the same as the SSSG monitored by the first receiver before the first receiver monitors the first signal includes:
restoring the first timer, in a case in which the SSSG monitored by the first receiver after the first receiver receives the first signal is the same as the SSSG monitored by the first receiver before the first receiver monitors the first signal.

In a possible design of this embodiment, a manner of adjusting the status of the first timer in a case in which the SSSG monitored by the first receiver after the first receiver receives the first signal is the same as the SSSG monitored by the first receiver before the first receiver monitors the first signal includes:
restarting the first timer, in a case in which the SSSG monitored by the first receiver after the first receiver receives the first signal is the same as the SSSG monitored by the first receiver before the first receiver monitors the first signal.

The first timer is restored or the first timer is restarted according to the configuration information transmitted by the apparatus for transmitting configuration information apparatus, so as to meet a specific scenario requirement.

For a function description of the transmitting module 1310, one may refer to content of step 1010 in the embodiment in shown FIG. 10.

FIG. 14 shows a schematic structural diagram of a terminal device 1400 according to an example embodiment of this application, including a processor 1401, a first receiver 1402, a second receiver 1403, a memory 1404, and a bus 1405.

The processor 1401 includes one or more processing cores. The processor 1401 executes various functional applications and information processing by running a software program and a module. In some embodiments, the processor 1401 may be configured to implement functions and steps of at least one of the foregoing processing module 1110 and processing module 1210.

The first receiver 1402 and the second receiver 1403 may be implemented as a communications component, the communications component may be a communications chip, and the communications component may be referred to as a transceiver. In some embodiments, the first receiver 1402 may be configured to implement functions and steps of at least one of the foregoing receiving module 1120 and receiving module 1220.

The memory 1404 is connected to the processor 1401 by using the bus 1405.

The memory 1404 may be configured to store at least one instruction, and the processor 1401 is configured to execute the at least one instruction, so as to implement steps in the foregoing method embodiments.

In addition, the memory 1404 may be implemented by any type of volatile or non-volatile storage device or a combination thereof. The volatile or non-volatile storage device includes but is not limited to: a magnetic disk or an optical disc, an electrically erasable programmable read-only memory (Electrically-Erasable Programmable Read Only Memory, EEPROM), an erasable programmable read-only memory (Erasable Programmable Read Only Memory, EPROM), a Static Random Access Memory (Static Random Access Memory, SRAM), a Read-Only Memory (Read-Only Memory, ROM), a magnetic memory, a flash memory, and a Programmable Read-Only Memory (Programmable Read-Only Memory, PROM).

In some embodiments, the first receiver 1402 independently receives the signal/data, or the processor 1401 controls the first receiver 1402 to receive the signal/data, or the processor 1401 requests the first receiver 1402 to receive the signal/data, or the processor 1401 cooperates with the first receiver 1402 to receive the signal/data.

In some embodiments, the second receiver 1403 independently transmits the signal/data, or the processor 1401 controls the second receiver 1403 to transmit the signal/data, or the processor 1401 requests the second receiver 1403 to transmit the signal/data, or the processor 1401 cooperates with the second receiver 1403 to transmit the signal/data.

FIG. 15 shows a schematic structural diagram of a network device 1500 according to an example embodiment of this application, including a processor 1501, a receiver 1502, a transmitter 1503, a memory 1504, and a bus 1505.

The processor 1501 includes one or more processing cores. The processor 1501 executes various functional applications and information processing by running a software program and a module.

The receiver 1502 and the transmitter 1503 may be implemented as a communications component, the communications component may be a communications chip, and the communications component may be referred to as a transceiver. In some embodiments, the transmitter 1503 may be configured to implement the functions and steps of the foregoing transmitting module 1310.

The memory 1504 is connected to the processor 1501 by using the bus 1505.

The memory 1504 may be configured to store at least one instruction, and the processor 1501 is configured to execute the at least one instruction, so as to implement steps in the foregoing method embodiments.

In addition, the memory 1504 may be implemented by any type of volatile or non-volatile storage device or a combination thereof. The volatile or non-volatile storage device includes but is not limited to a magnetic disk or an optical disc, an EEPROM, an EPROM, an SRAM, a ROM, a magnetic memory, a flash memory, and a PROM.

In some embodiments, the receiver 1502 independently receives the signal/data, or the processor 1501 controls the receiver 1502 to receive the signal/data, or the processor 1501 requests the receiver 1502 to receive the signal/data, or the processor 1501 cooperates with the receiver 1502 to receive the signal/data.

In some embodiments, the transmitter 1503 independently transmits the signal/data, or the processor 1501 controls the transmitter 1503 to transmit the signal/data, or the processor 1501 requests the transmitter 1503 to transmit the signal/data, or the processor 1501 cooperates with the transmitter 1503 to transmit the signal/data.

In an example embodiment, a computer readable storage medium is further provided. The computer readable storage medium stores at least one segment of program. The at least one segment of program is loaded and executed by a processor to implement the method for adjusting a timer status or the method for transmitting configuration information provided in the foregoing method embodiments.

In an example embodiment, a computer program product or a computer program is further provided. The computer program product or the computer program includes a computer instruction. The computer instruction is stored in a computer readable storage medium. The processor obtains the computer instruction from the computer readable storage medium. The processor executes the computer instruction to implement the method for adjusting a timer status or the method for transmitting configuration information provided in the foregoing method embodiments.

A person of ordinary skill in the art may understand that all or some of the steps of the embodiments may be implemented by hardware, or may be implemented by a program instructing related hardware. The program may be stored in a computer readable storage medium. The storage medium may be a read-only memory, a magnetic disk, an optical disc, or the like.

The foregoing is merely optional embodiments of this application, and is not intended to limit this application. Any modification, equivalent replacement, or improvement made within the spirit and principle of this application shall fall within the protection scope of this application.

## Claims

1. A method for adjusting a timer status, wherein the method is executed by a terminal device, the terminal device comprises a first receiver and a second receiver, operating energy consumption of the first receiver is lower than operating energy consumption of the second receiver, and the method comprises:
adjusting a status of the first timer based on a monitoring status of the first receiver,
wherein the first timer is configured to indicate a time for switching a search space set group SSSG, and the SSSG is a search space used when the second receiver performs monitoring.

2. The method according to claim 1, wherein the adjusting a status of a first timer based on a monitoring status of the first receiver comprises:
suspending the first timer when the first receiver monitors a first signal,
wherein the first signal is used to instruct the first receiver to wake up the second receiver.

3. The method according to claim 1 or 2, wherein the adjusting a status of a first timer based on a monitoring status of the first receiver comprises:
restoring the first timer when the first receiver receives a first signal,
wherein the first signal is used to instruct the first receiver to wake up the second receiver.

4. The method according to claim 3, further comprising:
waking up, by the first receiver after receiving the first signal, the second receiver to monitor a physical downlink control channel PDCCH on the first SSSG,
wherein the first SSSG is a SSSG on which the second receiver monitors the PDCCH before the first timer is suspended.

5. The method according to claim 1 or 2, wherein the adjusting a status of a first timer based on a monitoring status of the first receiver comprises:
adjusting a status of the first timer based on a first SSSG and a second SSSG when a first signal is received by the first receiver,
wherein the first signal is used to instruct the first receiver to wake up the second receiver; the first SSSG is a SSSG on which the second receiver monitors a PDCCH before the first timer is suspended, and the second SSSG is a SSSG on which the second receiver monitors the PDCCH after the first signal is received by the first receiver.

6. The method according to claim 5, wherein the adjusting a status of the first timer based on a first SSSG and a second SSSG when a first signal is received by the first receiver comprises at least one of the following:
restoring the first timer based on the first SSSG and the second SSSG when the first signal is received by the first receiver; restarting the first timer based on the first SSSG and the second SSSG when the first signal is received by the first receiver; or maintaining suspending of the first timer based on the first SSSG and the second SSSG when the first signal is received by the first receiver.

7. The method according to claim 6, wherein the restoring the first timer based on the first SSSG and the second SSSG when the first signal is received by the first receiver comprises:
restoring the first timer based on the second SSSG being a first index SSSG or a second index SSSG and the second SSSG is the same as the first SSSG, when the first signal is received by the first receiver;
wherein the maintaining suspending of the first timer based on the first SSSG and the second SSSG when the first signal is received by the first receiver comprises: maintaining suspending of the first timer based on the second SSSG being a third index SSSG when the first signal is received by the first receiver.

8. The method according to claim 6, wherein the restarting the first timer based on the first SSSG and the second SSSG when the first signal is received by the first receiver comprises:
restarting the first timer based on the second SSSG being a first index SSSG or a second index SSSG and the second SSSG is different from the first SSSG, when the first signal is received by the first receiver;
wherein the maintaining suspending of the first timer based on the first SSSG and the second SSSG when the first signal is received by the first receiver comprises:
maintaining suspending of the first timer based on the second SSSG being a third index SSSG when the first signal is received by the first receiver.

9. The method according to any one of claims 5 to 8, wherein the second SSSG is configured by a network device by using configuration signaling.

10. The method according to claim 1, wherein the adjusting a status of a first timer based on a monitoring status of the first receiver comprises:
stopping the first timer when the first receiver monitors a first signal,
wherein the first signal is used to instruct the first receiver to wake up the second receiver.

11. The method according to claim 1 or 10, wherein the adjusting a status of a first timer based on a monitoring status of the first receiver comprises:
adjusting a status of the first timer based on a third SSSG when a first signal is received by the first receiver,
wherein the first signal is used to instruct the first receiver to wake up the second receiver, and the third SSSG is a SSSG on which the second receiver monitors a PDCCH after the first signal is received by the first receiver.

12. The method according to claim 11, wherein the adjusting a status of the first timer based on a third SSSG when a first signal is received by the first receiver comprises at least one of the following:
restarting the first timer based on the third SSSG being a first index SSSG or a second index SSSG, when a first signal is received by the first receiver; or maintaining stopping of the first timer based on the third SSSG being a third index SSSG, when a first signal is received by the first receiver.

13. The method according to claim 11 or 12, wherein the third SSSG is configured by a network device by using configuration signaling.

14. The method according to claim 9 or 13, wherein the configuration signaling comprises at least one of the following:
radio resource control RRC signaling, a media access control control element MAC CE, a PDCCH or a first signal,
wherein the first signal is used to instruct the first receiver to wake up the second receiver.

15. A method for adjusting a timer status, wherein the method is executed by a terminal device, the terminal device comprises a first receiver and a second receiver, operating energy consumption of the first receiver is lower than operating energy consumption of the second receiver, and the method comprises:
adjusting a status of the first timer based on configuration information transmitted by a network device,
wherein the first timer is configured to indicate a time for switching a search space set group SSSG, and the SSSG is a search space used when the second receiver performs monitoring.

16. The method according to claim 15, wherein the configuration information is used to indicate a manner of adjusting the status of the first timer when the first receiver monitors a first signal,
wherein the first signal is used to instruct the first receiver to wake up the second receiver.

17. The method according to claim 16, wherein the manner of adjusting the status of the first timer when the first receiver monitors the first signal comprises:
stopping the first timer when the first receiver monitors the first signal.

18. The method according to claim 16, wherein the manner of adjusting the status of the first timer when the first receiver monitors the first signal comprises: suspending the first timer when the first receiver monitors the first signal.

19. The method according to claim 16, wherein the manner of adjusting the status of the first timer when the first receiver monitors the first signal comprises: maintaining running of the first timer when the first receiver monitors the first signal.

20. The method according to claim 15, wherein the configuration information is used to indicate a manner of adjusting the status of the first timer in a case in which a SSSG monitored by the first receiver after the first receiver receives the first signal is the same as a SSSG monitored by the first receiver before the first receiver monitors the first signal,
wherein the first signal is used to instruct the first receiver to wake up the second receiver.

21. The method according to claim 20, wherein the manner of adjusting the status of the first timer in a case in which a SSSG monitored by the first receiver after the first receiver receives the first signal is the same as a SSSG monitored by the first receiver before the first receiver monitors the first signal comprises:
restoring the first timer in a case in which the SSSG monitored by the first receiver after the first receiver receives the first signal is the same as the SSSG monitored by the first receiver before the first receiver monitors the first signal.

22. The method according to claim 20, wherein the manner of adjusting the status of the first timer in a case in which a SSSG monitored by the first receiver after the first receiver receives the first signal is the same as a SSSG monitored by the first receiver before the first receiver monitors the first signal comprises:
restarting the first timer in a case in which the SSSG monitored by the first receiver after the first receiver receives the first signal is the same as the SSSG monitored by the first receiver before the first receiver monitors the first signal.

23. A method for transmitting configuration information, wherein the method is executed by a network device, and the method comprises:
transmitting configuration information,
wherein the configuration information is used by a terminal device to adjust a status of a first timer, the first timer is configured to indicate a time for switching a search space set group SSSG, the SSSG is a search space used when a second receiver performs monitoring, the terminal device comprises a first receiver and the second receiver, and operating energy consumption of the first receiver is lower than operating energy consumption of the second receiver.

24. The method according to claim 23, wherein the configuration information is used to indicate a manner of adjusting a status of the first timer by the terminal device when the first receiver monitors a first signal,
wherein the first signal is used to instruct the first receiver to wake up the second receiver.

25. The method according to claim 24, wherein the adjusting a status of the first timer by the terminal device when the first receiver monitors the first signal comprises:
stopping, by the terminal device, the first timer when the first receiver monitors the first signal.

26. The method according to claim 24, wherein the adjusting a status of the first timer by the terminal device when the first receiver monitors the first signal comprises:
suspending, by the terminal device, the first timer when the first receiver monitors the first signal.

27. The method according to claim 24, wherein the adjusting a status of the first timer by the terminal device when the first receiver monitors a first signal comprises:
maintaining, by the terminal device, running of the first timer when the first receiver monitors the first signal.

28. The method according to claim 23, wherein the configuration information is used to indicate a manner of adjusting a status of the first timer by the terminal device in a case in which a SSSG monitored by the first receiver after the first receiver receives the first signal is the same as a SSSG monitored by the first receiver before the first receiver monitors the first signal,
wherein the first signal is used to instruct the first receiver to wake up the second receiver.

29. The method according to claim 28, wherein when the SSSG monitored by the first receiver after the first receiver receives the first signal is the same as the SSSG monitored by the first receiver before the first receiver monitors the first signal, a manner of adjusting the status of the first timer by the terminal device comprises:
restoring, by the terminal device, the first timer, when the SSSG monitored by the first receiver after the first receiver receives the first signal is the same as the SSSG monitored by the first receiver before the first receiver monitors the first signal.

30. The method according to claim 28, wherein when the SSSG monitored by the first receiver after the first receiver receives the first signal is the same as the SSSG monitored by the first receiver before the first receiver monitors the first signal, a manner of adjusting the status of the first timer by the terminal device comprises:
restarting, by the terminal device, the first timer, when the SSSG monitored by the first receiver after the first receiver receives the first signal is the same as the SSSG monitored by the first receiver before the first receiver monitors the first signal.

31. An apparatus for adjusting a timer status, wherein the apparatus comprises a first receiver and a second receiver, operating energy consumption of the first receiver is lower than operating energy consumption of the second receiver, and the apparatus comprises:
an adjusting module, configured to adjust a status of a first timer based on a monitoring status of the first receiver,
wherein the first timer is configured to indicate a time for switching a search space set group SSSG, and the SSSG is a search space used when the second receiver performs monitoring.

32. An apparatus for adjusting a timer status, wherein the apparatus comprises a first receiver and a second receiver, operating energy consumption of the first receiver is lower than operating energy consumption of the second receiver, and the apparatus comprises:
an adjusting module, configured to adjust a status of a first timer based on configuration information transmitted by a configuration information transmitting apparatus,
wherein the first timer is configured to indicate a time for switching a search space set group SSSG, and the SSSG is a search space used when the second receiver performs monitoring.

33. An apparatus for transmitting configuration information, comprising:
a transmitting module, configured to transmit configuration information,
wherein the configuration information is used by a timer status adjustment apparatus to adjust a status of a first timer, the first timer is configured to indicate a time for switching a search space set group SSSG, the SSSG is a search space used when a second receiver performs monitoring, the timer status adjustment apparatus comprises a first receiver and a second receiver, and operating energy consumption of the first receiver is lower than operating energy consumption of the second receiver.

34. A terminal device, comprising:
a processor; a transceiver connected to the processor; and a memory configured to store an executable instruction of the processor,
wherein the processor is configured to load and execute the executable instruction to implement the method for adjusting a timer status according to any one of claims 1 to 14, or the method for adjusting a timer status according to any one of claims 15 to 22.

35. A network device, comprising:
a processor; a transceiver connected to the processor; and a memory configured to store an executable instruction of the processor,
wherein the processor is configured to load and execute the executable instruction to implement the method for transmitting configuration information according to any one of claims 23 to 30.

36. A computer readable storage medium, wherein at least one program segment is stored in the computer readable storage medium, and the at least one program segment is loaded and executed by a processor to implement the method for adjusting a timer status according to any one of claims 1 to 14, or the method for adjusting a timer status according to any one of claims 15 to 22, or the method for transmitting configuration information according to any one of claims 23 to 30.

37. A computer program product, wherein the computer program product comprises a computer instruction, the computer instruction is stored in a computer readable storage medium, the processor acquires the computer instruction from the computer readable storage medium, and the processor executes the computer instruction to implement the method for adjusting a timer status according to any one of claims 1 to 14, or the method for adjusting a timer status according to any one of claims 15 to 22, or the method for transmitting configuration information according to any one of claims 23 to 30.
